# EUROPÄISCHE PATENTANMELDUNG

(11) **EP 2 821 600 A1**
(43) Veröffentlichungstag der Anmeldung: **07.01.2015**
(21) Anmeldenummer: 14165953.2
(22) Anmeldetag: 25.04.2014
(51) Int. Cl.: F01L 1/352

(54) **Zugmittelgetriebe sowie Nockenwellensteller mit derartigem Zugmittelgetriebe**

(30) Priorität: 02.07.2013 DE 102013106930
(71) Anmelder: Pierburg GmbH, 41460 Neuss (DE)
(72) Erfinder: Brunetti, Costantino, 58730 Fröndenberg (DE); Dr. Tönnesmann, Andres, 52066 Aachen (DE); Baden, Matthias, 47798 Krefeld (DE); Köster, Andreas, 45149 Essen (DE); Sansone, Manuel, 40479 Düsseldorf (DE); Sanders, Michael, 41564 Kaarst (DE)
(74) Vertreter: Patentanwälte ter Smitten Eberlein Rütten Partnerschaftsgesellschaft

(57) **Zusammenfassung**

Es sind Zugmittelgetriebe mit einem Hohlrad (10) mit einer Innenverzahnun (16), einem Sonnenrad (12) mit einer Außenverzahnung (18), einem Zugmittel (14), welches in die Innenverzahnung (16) des Hohlrades (10) und die Außenverzahnung (18) des Sonnenrades (12) greift und einem Vorspannelement (20), über welches das Zugmittel (14) in Richtung der Verzahnungen (16, 18) belastet ist, bekannt,

Um einen spielfreien Lauf des Zugmittels auch bei auftretendem Verschleiß sicherzustellen, wird vorgeschlagen, dass das Vorspannelement (20) zwei gegenüberliegende Schenkel (22, 24) aufweist, welche an radial gegenüberliegenden Seiten des Sonnenrades (12) zwischen das Sonnenrad (12) und das Hohlrad (10) greifen, wobei das Zugmittel (14) durch die Schenkel (22, 24) mit einer federelastischen Kraft in Richtung der Innenverzahnung (16) des Hohlrades (10) belastet ist.

Bei Verwendung an einem Nockenwellensteller ist auf diese Weise eine sehr genaue Verstellung des Nockenwellendrehwinkels zum Kurbelwellendrehwinkel möglich.

## Beschreibung

Die Erfindung betrifft ein Zugmittelgetriebe mit einem Hohlrad mit einer Innenverzahnung, einem Sonnenrad mit einer Außenverzahnung, einem Zugmittel, welches in die Innenverzahnung des Hohlrades und die Außenverzahnung des Sonnenrades greift und einem Vorspannelement, über welches das Zugmittel in Richtung der Verzahnungen belastet ist sowie einen Nockenwellensteller mit zwei derartigen axial hintereinander angeordneten Zugmittelgetrieben und einem Aktor, über den das erste Zugmittelgetriebe zum zweiten Zugmittelgetriebe phasenverschiebbar ist.

Derartige Zugmittelgetriebe sowie die daraus aufgebauten Nockenwellensteller können als Kettentriebe oder Riementriebe ausgeführt werden. Die Phasenverschiebung dient zur variablen Ventilzeitsteuerung zur Verbesserung des Ladungswechselprozesses im Motor und führt somit zu höherer Leistung des Motors bei geringeren Schadstoffemissionen. Die verwendeten Aktoren werden elektrisch über einen Elektromotor oder hydraulisch betrieben.

Als besonders vorteilhaft zur Phasenverschiebung zwischen der Nockenwelle und der Kurbelwelle haben sich Dreiwellengetriebe herausgestellt, bei denen die Verschiebung zwischen der Antriebswelle und der Abtriebswelle über eine zwischengeschaltete Stellwelle durchgeführt wird. Dabei werden einerseits Aktoren verwendet, die sich bei nicht gewünschter Verstellung jeweils synchron mit dem Getriebe drehen, oder Aktoren, welche die Stellwelle festhalten, während lediglich das übrige Getriebe dreht. Diese Getriebe bieten alle die Möglichkeit einer stufenlosen und je nach Wahl der Übersetzung feinfühligen Verstellung.

So wird beispielsweise in der DE 10 2005 018 956 A1 eine Vorrichtung zur Nockenwellenverstellung einer Brennkraftmaschine offenbart, bei der als Getriebe zwei hintereinandergeschaltete Planetengetriebe dienen, wobei sich die beiden Getriebe das Sonnenrad und die Planetenräder teilen. Durch eine Differenz der Zähnezahl des ersten Hohlrades zum zweiten Hohlrad entsteht bei einer Relativbewegung der Planeten zu den Hohlrädern eine Phasenverschiebung zwischen der Kurbelwelle und der Nockenwelle.

Ein ähnliches Getriebe ist aus der DE 73 37 206 U1 bekannt. Auch dieses Getriebe besteht im Wesentlichen aus zwei hintereinander geschalteten Planetengetrieben, wobei die beiden Planetensätze an einem gemeinsamen Planetenträger befestigt sind. Die Antriebswelle treibt ein erstes Sonnenrad an, wodurch der Planetenträger über die ersten Planetenräder gedreht wird. Hierdurch werden auch die zweiten Planetenräder gedreht, welche diese Bewegung auf das zweite Sonnenrad übertragen, welches drehfest mit dem Abtriebsteil verbunden ist. Somit entsteht eine synchrone Bewegung des Antriebsteils zum Abtriebsteil. Während das zweite Hohlrad im Gehäuse befestigt ist, wird eine Drehung des ersten Hohlrades durch die Selbsthemmung eines außen am Hohlrad angreifenden Aktors verhindert. Eine Phasenverschiebung erfolgt durch ein aktives Drehen am ersten Hohlrad, wodurch die Drehung des Planetenträgers entweder beschleunigt oder verringert wird.

Diese bekannten Phasensteller nutzen zur Bewegungsübertragung Getriebe mit Zahnrädern. Problematisch ist hierbei jedoch, dass eine weitgehende Spielfreiheit zur Einstellung genauer Winkelverschiebungen erforderlich ist. Um dies zu erreichen, ist es notwendig entweder qualitativ hochwertige und somit kostenintensive Verzahnungen zu nutzen oder zusätzliche Maßnahmen zur Erzeugung einer Spielfreiheit vorzunehmen, welche einen zusätzlichen Montageaufwand und somit ebenfalls steigende Herstellungskosten bewirkt.

Bei einer Verwendung von Kettentrieben werden Kettenspanner eingesetzt, die einerseits ein sicheres Eingreifen der Kette in das Kettenrad gewährleisten sollen und andererseits eine weitestgehende Spielfreiheit bei der Verstellung herstellen.

Ein solcher Kettenspanner für Endlostriebe wird beispielsweise in der DE 10 2006 025 890 A1 offenbart. Er besteht aus einem Kunststoffkörper in dem eine gebogene Blattfeder vorgespannt befestigt ist. Ein seitlich über den Kunststoffkörper herausragender Teil der Blattfeder dient als Auflagefläche für die Kette.

Dieser Kettenspanner eignet sich jedoch nicht zur Verwendung in einem Dreiwellengetriebe, bei dem ein sicheres Anliegen der Kettenglieder in Außen- und Innenverzahnungen sichergestellt werden muss und eine rotatorische Bewegung des Spannelementes möglich sein muss.

Es stellt sich daher die Aufgabe, ein Zugmittelgetriebe sowie einen Nockenwellensteller mit einem derartigen Zugmittelgetriebe bereit zu stellen, mit dem ein sicheres Eingreifen der Kettenglieder in außen- und innenliegende Kettenräder möglichst spielfrei sichergestellt wird, wobei eine rotatorische Bewegung des Vorspannelementes unter Beibehaltung der Anpresskraft der Kette sichergestellt werden soll.

Diese Aufgabe wird durch ein Zugmittelgetriebe mit den Merkmalen des Hauptanspruchs 1 sowie einen Nockenwellensteller mit den Merkmalen des Hauptanspruchs 14 gelöst.

Dadurch, dass bezüglich des Zugmittelgetriebes das Vorspannelement zwei gegenüberliegende Schenkel aufweist, welche an gegenüberliegenden Seiten des Sonnenrades zwischen das Sonnenrad und das Hohlrad greifen, wobei das Zugmittel durch die Schenkel mit einer federelastischen Kraft in Richtung der Innenverzahnung des Hohlrades belastet ist, wird sichergestellt, dass ein sicherer Eingriff des Zugmittels in die Innenverzahnung des Hohlrades als auch in die Außenverzahnung des Sonnenrades gewährleistet wird. Auch bei auftretendem Verschleiß wird auf diese Weise eine weitestgehende Spielfreiheit des Zugmitteltriebes erzielt. Zusätzlich werden bei Verwendung einer Kette als Zugmittel die sich durch die vieleckförmige Auflage der Kette ergebenden Schwankungen des wirksamen Durchmessers, auch Polygoneffekt genannt, ausgeglichen.

Dadurch, dass bezüglich des Nockenwellenstellers die beiden Zugmittelgetriebe über ein gemeinsames Vorspannelement gekoppelt sind, auf dessen Schenkeln zwei axial hintereinander liegende Federelemente angeordnet sind, die eine federelastische Kraft in Richtung der Innenverzahnung des jeweils gegenüber liegenden Hohlrades auf das jeweilige Zugmittel erzeugen, wird einerseits die Spielfreiheit beider Zugmittelgetriebe auch bei auftretendem Verschleiß sichergestellt, wodurch eine sehr genaue Einstellbarkeit des Nockenwellenstellers erreicht wird und andererseits die Kopplung beider Getriebe über das Vorspannelement hergestellt, so dass die Phasenverstellung über einen am Vorspannelement angreifenden Aktor erfolgen kann.

Vorzugsweise weist das Vorspannelement des erfindungsgemäßen Zugmittelgetriebes ein gelagertes Befestigungselement auf, von dem aus sich die Schenkel in axialer Richtung zwischen das Hohlrad und das Sonnenrad erstrecken. Auf diese Weise wird eine kompakte Einheit mit wenigen Bauteilen geschaffen. So reicht eine einzige Lagerung für beide als Kettenspanner wirkende Schenkel aus.

In einer bevorzugten Ausbildung weist jeder Schenkel ein festes Schenkelelement auf, an dessen radial nach außen weisender Oberfläche ein Federelement angeordnet ist, über welches die auf das Zugmittel wirkende Kraft erzeugt wird. Das feste Schenkelelement dient als Auflagefläche für das die Federkraft erzeugende Federelement, so dass bei Überschreiten der Federkraft eine feste Auflage für das Zugmittel gegeben ist.

Vorzugsweise ist das Federelement eine Blattfeder, die sich auf der nach außen weisenden Oberfläche des Schenkelelementes erstreckt. So kann über die gesamte Auflagelänge des Zugmittels eine Federkraft erzeugt werden, was zu einem gleichmäßigen Anpressen mehrerer Zugmittelglieder in die entsprechenden Aufnahmeöffnungen des Rades führt und somit zu geringeren Belastungen der Einzelglieder.

In einer weiterführenden Ausführung weist jeder Schenkel eine Gleitschiene auf, auf der das Zugmittel gleitet. Dies verringert die Reibung zwischen dem Zugmittel und der Auflagefläche und somit den Verschleiß.

Vorzugsweise ist das Federelement zwischen der Gleitschiene und dem festen Schenkelefement angeordnet, so dass die Federkraft über die Gleitschiene auf das Zugmittel übertragen wird.

In einer vorteilhaften Ausgestaltung der Erfindung ragt die Blattfeder über die Umfangsenden der festen Schenkelelemente. So wird das Zugmittel sanft aus dem inneren Rad mit der Außenverzahnung gehoben und stellt einen gleitenden Übergang zur Innenverzahnung des äußeren Rades sicher.

Dabei liegen die über die Umfangsenden des festen Schenkelementes ragenden Enden der Blattfeder federnd gegen das Zugmittel an, so dass die Kette gestrafft in der Außenverzahnung des Innenrades gehalten wird.

In einer weiterführenden vorteilhaften Ausführungsform weist die Blattfeder zwei Auflageflächen am festen Schenkelement auf, so dass eine federelastische Fläche zwischen den Auflageflächen angeordnet ist und zwei weitere federelastische Flächen an den Blattfederenden jenseits der Auflageflächen ausgebildet sind. Durch den mittleren Teil der Blattfeder zwischen den Auflageflächen wird ein Toleranzausgleich auch bei Verschleiß erzeugt, so dass das Zugmittel immer in die Innenverzahnung des Hohlrades gedrückt wird. Des Weiteren wird die Spannung des Zugmittels durch die Blattfederenden erhöht.

Vorzugsweise liegt die Gleitschiene auf der ersten federelastischen Fläche auf. Dies hat den Vorteil, dass die Teile einzeln ausgetauscht werden können.

Besonders vorteilhaft ist es, wenn jedes feste Schenkelelement eine sich entlang des Umfangs erstreckende Vertiefung aufweist, in der die Blattfeder und die Gleitschiene aufgenommen sind. Mittels dieser Vertiefung erfolgt sowohl eine axiale Fixierung der Kette auf dem Schenkel als auch eine Fixierung des Blattfederelementes und der Gleitschiene am festen Schenkelelement.

In einer hierzu weiterführenden Ausbildung der Erfindung sind an der Blattfeder und der Gleitschiene Formschlussmittel ausgebildet, welche mit Formschlussmitteln des festen Schenkelelementes zur Fixierung der Gleitschiene und der Blattfeder in Umfangsrichtung zusammenwirken. Auf zusätzliche Befestigungsmittel kann entsprechend verzichtet werden.

In einer alternativen Ausgestaltung der Erfindung ist die Gleitschiene als Kunststoffschicht auf der Blattfeder ausgeführt. Dies verringert den Montageaufwand, da die Bauteileanzahl reduziert wird.

Es werden somit ein Zugmittelgetriebe sowie ein Nockenwellensteller mit einem derartigen Zugmittelgetriebe geschaffen, bei denen ein sicheres Eingreifen der Kettenglieder in außen- und innenliegende Kettenräder durch Erzeugen einer Anpresskraft und einer Lösekraft auch bei rotatorischer Bewegung der Schenkel, auf denen die Zugmittel laufen, sowie durch Ausgleich des Polygoneffektes sichergestellt wird. Der Nockenwellensteller arbeitet weitestgehend spielfrei, so dass eine feinfühlige Steuerung bei geringem Geräusch möglich ist. Das Zugmittelgetriebe ist einfach montierbar und weist eine hohe Lebensdauer durch Ausgleich von Toleranzen aufgrund von Verschleiß auf.

Ein Ausführungsbeispiel ist in den Figuren dargestellt und wird nachfolgend beschrieben.

Die Figur 1 zeigt eine perspektivische Ansicht eines erfindungsgemäßen Zugmittelgetriebes in geschnittener Darstellung.

Die Figur 2 zeigt einen Schenkel des erfindungsgemäßen Zugmittelgetriebes in perspektivischer Darstellung.

Die Figur 3 zeigt den Schenkel aus Figur 2 in gesprengter perspektivischer Darstellung.

Die Figur 4 zeigt eine Seitenansicht eines Getriebes einer erfindungsgemäßen Vorrichtung zur Phasenverschiebung in schematischer Darstellung.

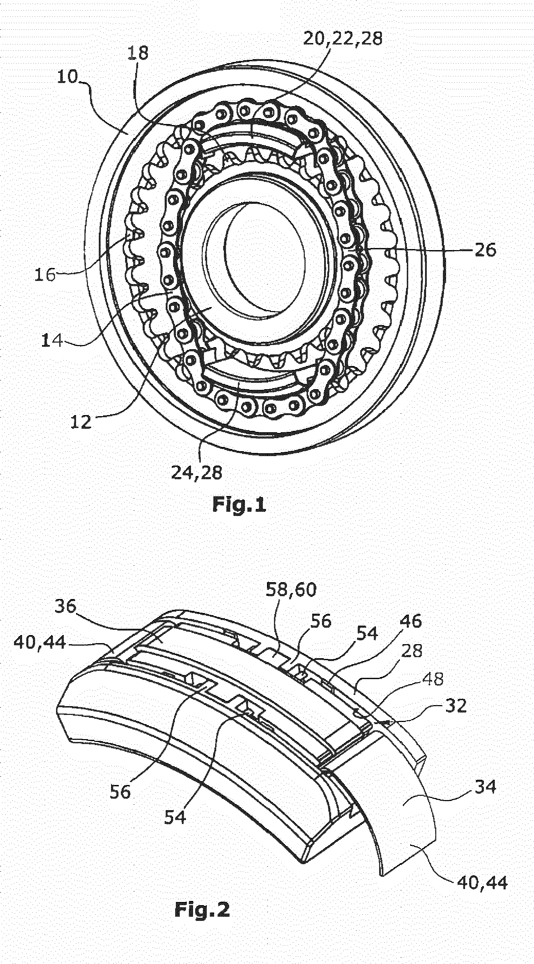

Das in Figur 1 dargestellte erfindungsgemäße Zugmittelgetriebe weist ein Hohlrad 10 auf, in dessen Innern konzentrisch zum Hohlrad 10 ein Sonnenrad 12 angeordnet ist. Ein als Kette ausgebildetes Zugmittel 14 greift sowohl in eine Innenverzahnung 16 des Hohlrades 10 als auch in eine Außenverzahnung 18 des Sonnenrades 12 ein, so dass eine Bewegung des Hohlrades 10 oder des Sonnenrades 12 über das Zugmittel 14 auf das jeweils andere Rad 12, 10 übertragbar ist.

Um eine solche Bewegungsübertragung sicherzusteilen, muss das Zugmittel 14 in die Verzahnungen 16, 18 des Sonnenrades 12 und des Hohlrades 10 eingreifen. Dieses Eingreifen wird durch ein Vorspannelement 20 erreicht, welches das Zugmittel 14 in Richtung der Verzahnungen 16, 18 belastet.

Erfindungsgemäß weist das Vorspannelement 20 hierzu zwei radial gegenüberliegende Schenkel 22, 24 auf, welche an gegenüberliegenden Seiten des Sonnenrades 12 zwischen das Sonnenrad 12 und das Hohlrad 10 ragen. Die Umfangslänge der Schenkel 22, 24 ist dabei so gewählt, dass diese zwischen dem Radius und dem Durchmesser des Sonnenrades 12 liegt, wodurch einerseits sichergestellt wird, dass mehrere Glieder 26 des Zugmittels 14 in die Innenverzahnung 16 des Hohlrades 10 greifen und andererseits sichergestellt wird, dass ein Eingreifen mehrerer Glieder 26 in die Außenverzahnung 18 des Sonnenrades 12 erfolgt.

Um dieses Eingreifen der Kettenglieder 26 in die Verzahnungen auch bei auftretendem Verschleiß und bei Fertigung mit großen Toleranzen sicherzustellen, sind die Schenkel 22, 24 derart ausgebildet, dass sie das Zugmittel 14 mit einer federelastischen Kraft, welche in Richtung der Innenverzahnung 16 des Hohlrades 10 wirkt, belasten.

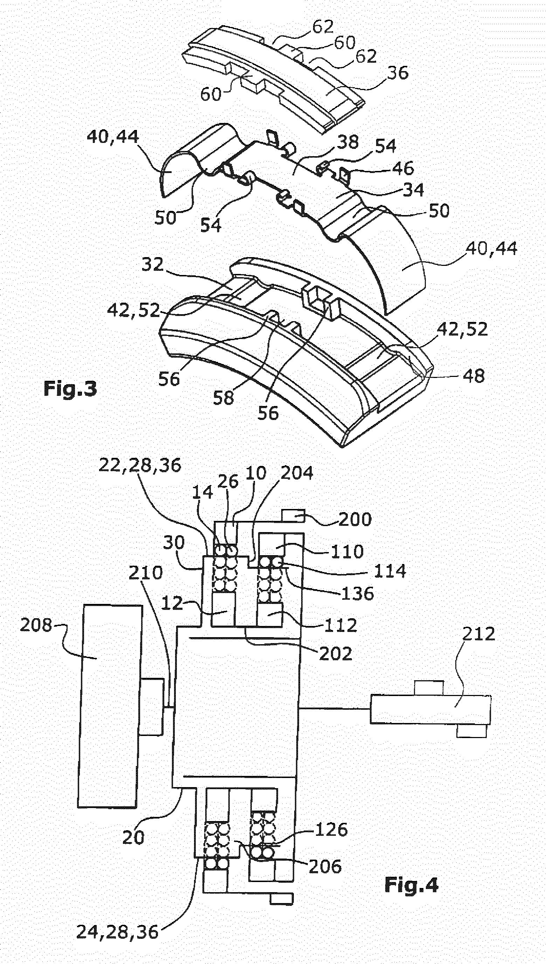

Hierzu weisen die Schenkel 22, 24 jeweils eine festes Schenkelelement 28 auf, welche sich von einem gemeinsamen zentralen Befestigungselement 30 aus, welches in Figur 4 zu erkennen ist, axial zwischen das Sonnenrad 12 und das Hohlrad 10 erstrecken. Die festen Schenkelelemente 28 weisen eine in Umfangsrichtung verlaufende Vertiefung 32 auf, in der ein Federelement 34 in Form einer Blattfeder sowie eine auf dem Federelement 34 angeordnete Gleitschiene 36 befestigt sind.

Das Federelement 34 weist drei federelastisch wirkende Flächen 38, 40 auf, von denen die erste federelastische Fläche 38, zwischen zwei Auflageflächen 42 des Federelementes 34 am festen Schenkelelement 28 und die anderen beiden federelastischen Flächen 40 durch die über die Umfangsenden des festen Schenkelelementes 28 herausragenden Enden 44 des Blattfederelementes 34 gebildet sind. Die Gleitschiene 36 liegt auf der mittleren federelastischen Fläche 38 auf.

Die Befestigung sowohl des Federelementes 34 als auch der Gleitschiene 36 erfolgt durch Formschlussmittel. Eine axiale Bewegung der Gleitschiene 36 und des Federelementes 34 wird durch die Anordnung in der Vertiefung 32 des festen Schenkelelementes 28 sichergestellt. Zusätzlich sind zur exakten Positionierung an den entgegengesetzten seitlichen Enden des Federelementes 34 vier Führungslaschen 46 die sich in radialer Richtung entlang der die Vertiefung 32 begrenzenden Wände 48 erstrecken. Ein Verschieben des Federelementes 34 in Umfangsrichtung wird einerseits dadurch verhindert, dass die Auflageflächen, welche am Federelement 34 als Wölbungen 50 ausgeführt sind, in entsprechend geformte Taschen 52 in der Vertiefung 32 ragen und andererseits dadurch, dass vier Positionslaschen 54 am Federelement 34 ausgebildet sind, von denen sich jeweils zwei gegenüberliegen und die gegen Vorsprünge 56 in der Vertiefung 32 am festen Schenkelelement 28 federnd anliegen. Jeweils zwei Vorsprünge 56 erstrecken sich von jeder begrenzenden Wand 48 der Vertiefung 32. Zwischen diesen zwei Vorsprüngen 56 entsteht somit an beiden axialen Seiten der Vertiefung 32 eine Ausformung 58, in die jeweils ein Vorsprung 60 ragt, der an der Gleitschiene 36 ausgebildet ist, so dass auch die Gleitschiene 36 gegen ein Verschieben in Umfangsrichtung gesichert ist. Neben diesen Vorsprüngen 60 liegen beidseitig Ausnehmungen 62, in die die Laschen 46, 54 des Federelementes 34 ragen.

Die Gleitschiene 36 wird durch die mittlere federelastische Fläche 38 in Richtung der Innenverzahnung 16 des Hohlrades 10 beziehungsweise des Zugmittels 14 federnd belastet. Die beiden überstehenden Enden 44 des Blattfederelementes 34 dienen dazu, dass die Glieder 26 des Zugmittels 14 aus der Außenverzahnung 18 des Sonnenrades 12 gehoben werden und das Zugmittel 14 zusätzlich gespannt wird, wodurch eine weitestgehende Spielfreiheit erzielt wird.

Als besonders vorteilhaft hat sich die Nutzung eines derartigen Zugmittelgetriebes für einen Nockenwellensteller herausgestellt, wie er in Figur 4 dargestellt ist. Dieser Nockenwellensteller besteht im Wesentlichen aus zwei miteinander gekoppelten Zugmittelgetrieben, welche axial hintereinander angeordnet sind und über ein gemeinsames Vorspannelement 20 in Form eines Rakels miteinander verbunden sind. Dies bedeutet, dass das Befestigungselement 30 zentral gelagert ist und sich vom Befestigungselement 30 die zwei Schenkel 22, 24 nicht nur zwischen das Sonnenrad 12 und das Hohlrad 10 des ersten Zugmittelgetriebes, sondern weiter zwischen ein Sonnenrad 112 und ein Hohlrad 110 des zweiten Zugmittelgetriebes erstrecken. Entsprechend sind selbstverständlich an jedem Schenkel 22, 24 auch zwei axial hintereinander angeordnete Vertiefungen 32 am festen Schenkelelement 28 ausgebildet, in denen jeweils ein Blattfederelement und eine Gleitschiene 36, 136 angeordnet sind, wobei die erste Kette 14 auf der ersten Gleitschiene 36 läuft und eine zweite Kette 114 des zweiten Zugmittelgetriebes auf der zweiten Gleitschiene 136 läuft.

Am Hohlrad 10 des ersten Zugmittelgetriebes ist ein als Antriebsrad 200 dienendes Kettenrad befestigt, welches über eine Kurbelwelle eines Verbrennungsmotors angetrieben wird.

Die Bewegung dieses ersten Zugmittelgetriebes wird auf das zweite Zugmittelgetriebe übertragen, indem das erste Sonnenrad 12 mit dem zweiten Sonnenrad 112 auf einem gemeinsamen, um eine Drehachse drehbaren Sonnenradträger 202 befestigt wird. Das Hohlrad 110 des zweiten Zugmittelgetriebes ist fest mit einer als Abtriebsteil dienenden Nockenwelle 212 verbunden.

Um ein Eingreifen der Ketten 14, 114 in die Verzahnungen sicherzustellen, werden die Ketten 14, 114 über das beschriebene Vorspannelement 20 in die Innenverzahnungen der Hohlräder 10, 110 gedrückt. Hierzu weist das Vorspannelement 20 an seinen beiden Schenkeln 22, 24 jeweils einen Absatz 204, 206 auf, von dem aus sich die Schenkel 22, 24 mit vermindertem Durchmesser vom ersten Zugmittelgetriebe in das zweite Zugmittelgetriebe erstrecken. Der Abstand des Außenumfangs der Schenkel 22, 24 zur Drehachse entspricht jeweils im Wesentlichen dem Innenradius des jeweiligen Hohlrades 10, 110 gemindert um die Dicke der Glieder 26, 126 der Kette 14, 114.

Das Vorspannelement 20 läuft in Phasen ohne Drehwinkelverstellung mit der Drehzahl des Antriebsrades 200 um. Der Antrieb wird durch einen als Aktor 208 wirkenden Elektromotor verwirklicht, der entsprechend angesteuert wird und über eine Antriebswelle 210 mit dem Vorspannelement 20 drehverbunden ist. In diesem Fall laufen beide Getriebe sowie das Vorspannelement 20, sowie die Nockenwelle und das Antriebsrad 200 mit gleicher Drehzahl als Gesamtpaket um.

Soll nun eine Phasenverschiebung zwischen dem Antriebsrad 200 und der Nockenwelle erreicht werden, wird der Aktor 208 mit einer anderen Drehzahl als das Antriebsrad 200 angetrieben. Eine Drehwinkelverschlebung kommt dabei durch die Differenz der Quotienten der Zähnezahlen vom jeweiligen Hohlrad 10, 110 zum Sonnenrad 12, 112, also durch den Unterschied der Übersetzung des ersten Getriebes zum zweiten Getriebe zustande. Für eine Phasenverschiebung in entgegengesetzter Drehrichtung müsste eine entsprechende Anzahl Umdrehungen weniger erfolgen.

Durch die hohen zu erreichenden Übersetzungsverhältnisse und insbesondere die durch das Vorspannelement weitestgehende Spielfreiheit können gewünschte Drehwinkelverschiebungen sehr feinfühlig mit geringen notwendigen Antriebskräften durchgeführt werden. Zusätzlich wird diese Feinfühligkeit in der Verstellung durch den Ausgleich des Polygoneffektes erhöht, da sonst entstehende Ungleichförmigkeiten der Kettengeschwindigkeit ausgeglichen werden.

Es sollte deutlich sein, dass verschiedene konstruktive Modifikationen im Vergleich zu den beschriebenen Ausführungsformen möglich sind, ohne den Schutzbereich des Hauptanspruchs zu verlassen. So können andere Federelemente statt der Blattfedern verwendet werden oder die Blattfedern können mit einer Kunststoffschicht versehen werden, welche dann als Gleitschiene dient. Auch eine direkte Auflage auf den Federelementen ist denkbar.

## Patentansprüche

1. Zugmittelgetriebe mit
einem Hohlrad (10) mit einer Innenverzahnung (16),
einem Sonnenrad (12) mit einer Außenverzahnung (18),
einem Zugmittel (14), welches in die Innenverzahnung (16) des Hohlrades (10) und die Außenverzahnung (18) des Sonnenrades (12) greift und
einem Vorspannelement (20), über welches das Zugmittel (14) in Richtung der Verzahnungen (16, 18) belastet ist,
**dadurch gekennzeichnet, dass**
das Vorspannelement (20) zwei gegenüberliegende Schenkel (22, 24) aufweist, welche an radial gegenüberliegenden Seiten des Sonnenrades (12) zwischen das Sonnenrad (12) und das Hohlrad (10) greifen, wobei das Zugmittel (14) durch die Schenkel (22, 24) mit einer federelastischen Kraft in Richtung der Innenverzahnung (16) des Hohlrades (10) belastet ist.

2. Zugmittelgetriebe nach Anspruch 1,
**dadurch, gekennzeichnet, dass**
das Vorspannelement (20) ein gelagertes Befestigungselement (30) aufweist, von dem aus sich die Schenkel (22, 24) in axialer Richtung zwischen das Hohlrad (10) und das Sonnenrad (12) erstrecken.

3. Zugmittelgetriebe nach einem der Ansprüche 1 oder 2,
**dadurch gekennzeichnet, dass**
jeder Schenkel (22, 24) ein festes Schenkelelement (28) aufweist, an dessen radial nach außen weisender Oberfläche ein Federelement (34) zur Erzeugung der federelastischen Kraft angeordnet ist.

4. Zugmittelgetriebe nach Anspruch 3,
**dadurch gekennzeichnet, dass**
das Federelement (34) eine Blattfeder ist, die sich auf der nach außen weisenden Oberfläche des festen Schenkelelementes (28) erstreckt.

5. Zugmittelgetriebe nach einem der vorhergehenden Ansprüche,
**dadurch gekennzeichnet, dass**
jeder Schenkel (22, 24) eine Gleitschiene (36) aufweist, auf der das Zugmittel (14) gleitet.

6. Zugmittelgetriebe nach einem der vorhergehenden Ansprüche,
**dadurch gekennzeichnet, dass**
das Federelement (34) zwischen der Gleitschiene (36) und dem festen Schenkelelement (28) angeordnet ist.

7. Zugmittelgetriebe nach Anspruch 4,
**dadurch gekennzeichnet, dass**
die Blattfeder (34) über die Umfangsenden des festen Schenkelelementes (28) ragt.

8. Zugmittelgetriebe nach Anspruch 7,
**dadurch gekennzeichnet, dass**
die über die Umfangsenden des festen Schenkelementes (28) ragenden Enden (44) der Blattfeder (34) federnd gegen das Zugmittel (14) anliegen.

9. Zugmittelgetriebe nach einem der Ansprüche 4 bis 8,
**dadurch gekennzeichnet, dass**
die Blattfeder (34) zwei Auflageflächen (42) am festen Schenkelement (28) aufweist, so dass eine federelastische Fläche (38) zwischen den Auflageflächen (42) angeordnet ist und zwei weitere federelastische Flächen (40) an den Blattfederenden (44) jenseits der Auflageflächen (42) ausgebildet sind.

10. Zugmittelgetriebe nach Anspruch 9,
**dadurch gekennzeichnet, dass**
die Gleitschiene (36) auf der ersten federelastischen Fläche (38) aufliegt.

11. Zugmittelgetriebe nach einem der Ansprüche 5 bis 10,
**dadurch gekennzeichnet, dass**
jedes feste Schenkelelement (28) eine sich entlang des Umfangs erstreckende Vertiefung (32) aufweist, in der die Blattfeder (34) und die Gleitschiene (36) aufgenommen sind.

12. Zugmittelgetriebe nach Anspruch 11,
**dadurch gekennzeichnet, dass**
an der Blattfeder (34) und der Gleitschiene (36) Formschlussmittel (46, 50, 54, 60, 62) ausgebildet sind, welche mit Formschlussmitteln (52, 56, 58) des festen Schenkelelementes (28) zur Fixierung der Gleitschiene (36) und der Blattfeder (34) in Umfangsrichtung zusammenwirken.

13. Zugmittelgetriebe nach einem der Ansprüche 5 bis 9,
**dadurch gekennzeichnet, dass**
die Gleitschiene (36) als Kunststoffschicht auf der Blattfeder (34) ausgeführt ist.

14. Nockenwellensteller mit einem ersten und einem zweiten Zugmittelgetriebe nach einem der vorhergehenden Ansprüche, welche axial hintereinander angeordnet sind,
einem Aktor (208), über den das erste Zugmittelgetriebe zum zweiten Zugmittelgetriebe phasenverschiebbar ist,
**dadurch gekennzeichnet, dass**
die beiden Zugmittelgetriebe über ein gemeinsames Vorspannelement (20) gekoppelt sind, auf dessen Schenkeln (22, 24) zwei axial hintereinander liegende Federelemente (34, 134) angeordnet sind, die eine federelastische Kraft in Richtung der Innenverzahnung (16, 116) des jeweils gegenüber liegenden Hohlrades (10, 110) auf das jeweilige Zugmittel (14, 114) erzeugen.
